# EUROPEAN PATENT SPECIFICATION

(11) **EP 1 165 408 B1**
(45) Date of publication and mention of the grant of the patent: **15.10.2003**
(21) Application number: 99960078.6
(22) Date of filing: 01.12.1999
(51) Int. Cl.: B65G 1/00

(54) **METHOD FOR STORAGE HANDLING OF STACKABLE STORAGE OBJECTS**
VERFAHREN ZUM HANDHABEN UND LAGERN VON STAPELBAREN GEGENSTÄNDEN
PROCEDE DE MANUTENTION ET D'EMMAGASINAGE D'OBJETS EMPILABLES

(30) Priority: 03.12.1998 SE 9804186
(43) Date of publication of application: 02.01.2002
(73) Proprietor: Johansson, Björn, 439 91 Onsala (SE)
(72) Inventor: Johansson, Björn, 439 91 Onsala (SE)
(74) Representative: Andersson, Per Rune
(86) International application number: PCT/SE99/02239
(87) International publication number: WO 00/035783

(56) References cited:
- DE-A1- 2 344 861
- DE-C2- 3 313 368
- GB-A- 2 265 893

## Description

### TECHNICAL FIELD

The present invention relates to a method for storage handling of stackable storage objects such as, for example, metal sheets. The invention can advantageously be used in the central warehouse of a metal sheet user or in the collection depot of a steel wholesaler. Alternatively, the invention can also be advantageously applied in production stores in direct connection with one or more processing machines.

In storage handling of metal sheets it is customary, according to known techniques, to use a so-called level store in which metal sheets are stored on pallets. The store comprises a number of shelves or compartments arranged laterally and vertically. Here, sheets of a certain type and size - normally characterized by a specific article number - are stored on a pallet. Sheets with different article numbers are not normally stored on the same pallet. The actual storage handling in a level store of this type is normally carried out using trucks. A problem with such a level store is that it requires large storage surfaces in the storage premises, partly because each shelf position or compartment is intended only to accommodate sheets of the same article number and partly because the trucks require a relatively large manoeuvring space around the storage shelves. In addition, the operating costs for the trucks are not insignificant, irrespective of whether the trucks used are driver-operated or driverless. In brief, a level store with truck operation entails relatively high storage costs.

In smaller plants, it is customary for different types of sheets to be stored vertically in stands in which the sheets lean against vertical support pins. Since the sheets are usually transported and delivered to the plant in a horizontal position, they have to be lifted by the warehouse personnel on arrival. The customary manual handling therefore entails handling difficulties and risks of accidents, since the sheets are often heavy and it is difficult to grip a vertical sheet in the centre of gravity before lifting it. In addition, the sheets generally have to be laid down horizontally again before leaving the store.

### DESCRIPTION OF THE INVENTION

The invention solves the above problems by providing a method for storage handling of stackable storage objects in accordance with attached Patent Claim 1. The invention permits extremely cost-effective storage handling in a small surface area in relation to previously know storage handling systems.

According to the invention, the storage area can be made particularly compact by virtue of the fact that storage objects with different article numbers can be stored in one and the same storage stack. In addition, the invention eliminates the need for extensive shelf systems and pallets since the storage objects can be placed directly of the floor surface of the storage area. In this way, the weight of the storage stacks is also distributed over a greater area of the floor, which is favourable if there are any limitations in the load-bearing capacity of the floor.

The storage handling according to the invention is largely automated and is controlled by a control unit which is provided with a processor and which, via a communications link, controls a collector device in accordance with instructions from the user. When a withdrawal order relating to a certain article number or a series of different article numbers is obtained, the storage objects wanted are rapidly and effectively sorted out in the desired order of use.

A further advantage of the invention is that the storage handling requires only very limited supervision and involvement by the user, since the sorting in the storage area takes place automatically in the method according to the invention.

### BRIEF DESCRIPTION OF THE DRAWINGS

The invention will be described below on the basis of an illustrative embodiment and with reference to the attached drawings, in which:
Figure 1 shows diagrammatically a store adapted to the method according to the invention, and a diagrammatically illustrated processing machine at the side of the store, representing a dispatch position in the store;
Figure 2 shows diagrammatically a simplified image of a store in which the various storage objects have been marked with article numbers. The storage stack located on the far left in this case represents an arrival stack, the other four stacks representing storage stacks. The illustrated positions of the storage objects represent a randomly selected starting point for the following explanation of the method according to the invention;
Figures 3 - 10 show the successive transfer operations, starting from Figure 2, which are carried out in the method according to the invention. The final figure, i.e. Figure 10, thus shows the store in the state when the sorting has been accomplished according to the withdrawal list.

### DESCRIPTION OF PREFERRED EMBODIMENT

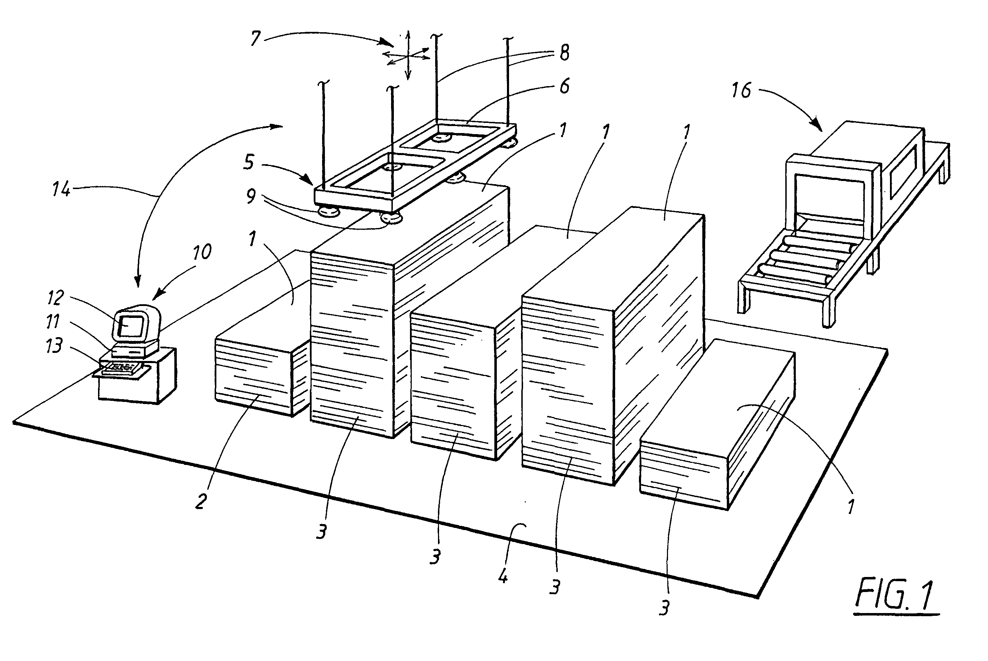

Figure 1 shows a diagrammatic representation of a store containing storage objects in the form of metal sheets. The storage objects are generally designated by reference number 1. The store contains an arrival stack 2 and four storage stacks 3. However, only three stacks are needed for the method according to the invention to be able to function, but since the number of sorting stages increases with a minimum number of storage stacks, four storage stacks are used in the embodiment in order to illustrate the method. It can also be seen from Figure 1 that the storage stacks 3 and the arrival stack 2 are placed directly on a store floor 4. Thus, the method according to the invention does not require the use of loading pallets or lateral guides in the form of boundary walls, rails etc. The storage stacks 3 can advantageously be placed in close proximity to each other in such a way that the available floor space in the store is utilized effectively.

The storage objects 1 are moved between the said arrival stack 2 and the storage stacks 3 by means of a collector 5, for example consisting of a lifting frame 6 which is movably connected to a crossbar arrangement (not shown) suspended over the store area. The collector 5 can be raised and lowered and can also be moved in the horizontal plane according to the arrows 7. In the example shown, the collector 5 is suspended on cables 8 which, in the figure, are not shown in full since the crossbar pieces of the collector 5 are not shown. The collector 5 is provided with means for securing and releasing the storage objects 1, these means being in the form of suction cups 9 which are thus intended to hold the storage objects 1 by means of a vacuum which is generated in a known manner using ejectors driven by compressed air. However, the collector 5 can also be equipped with holder members provided with electromagnets. Moreover, in the case where the storage objects 1 consist instead of, for example, trays with retail contents, the collector 5 can also be equipped with traditional gripping members which physically grip onto coupling members on the tray.

A storage system applying the method according to the invention also includes a control unit 10 which is provided with a processor and preferably consists of a generally available personal computer or computer work station of a conventional type. The control unit 10 thus comprises a systems unit 11 and a user interface connected thereto and including a computer screen 12 and a keyboard 13. The control unit 10 controls the movements of the collector 5 in accordance with instructions from a user, which are input to the control unit via the said user interface 12, 13. The control unit 10 is in contact with the collector 5 via a communications link 14 which, in Figure 1, is shown diagrammatically by a two-way arrow.

A processing station 16 placed outside the storage floor area 4 is also shown diagrammatically in Figure 1. In the example shown, the processing station 16 constitutes the final destination of the storage objects which are delivered from the store. However, depending on the store's use, the processing station 16 can instead consist of a dispatch point or a goods vehicle for transporting and delivering the storage objects to the actual end-user.

When storage objects 1 arrive in the said arrival stack 2, the control unit 10 is fed with information on the individual identity of each storage object, its type and its position in the arrival stack 2. The instructions include withdrawal orders which are arranged in a withdrawal list in the control unit. The said withdrawal orders are arranged in the withdrawal list in the desired sequence, in which each withdrawal order concerns a storage object 1 of a certain type. The term "type" used here is a collective term for storage objects having identical dimensions, for example. Storage objects of a specific type are normally assigned a special article number, which thus characterizes the type. The term "desired sequence" includes the situation where storage objects with the desired article number are arranged in a desired sequence and also the situation where the sequence is determined by the times at which different storage objects have been requested by the user. In the latter case, earlier withdrawal orders are executed before later withdrawal orders.

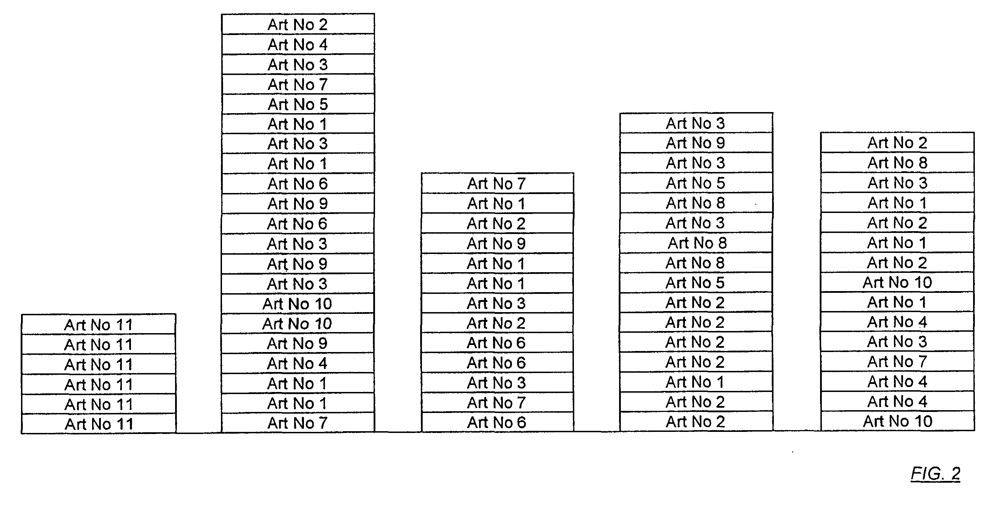

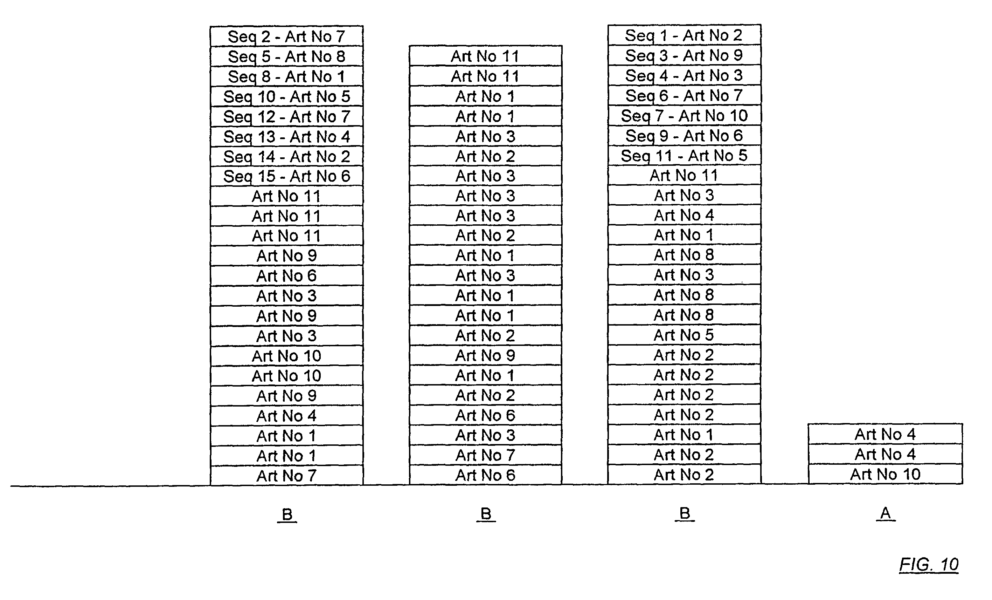

The method according to the invention for storage handling will now be described in more detail with reference to Figures 2 - 10. Figure 2 shows a randomly selected starting point for the method, where diagrammatically represented storage objects 1 have been provided with eleven different article numbers. The stack on the far left of the figure is an arrival stack 2, while the other four stacks are storage stacks 3. In the starting position shown, the storage objects 1 are lying unsorted in the storage stacks 3 and the imagined situation is that the arrival stack 2 has just been filled with six storage objects of article number 11. The storage objects which are delivered to the store are first placed on the arrival stack 2, and the user enters information on the individual identity of each storage object, its type and its position in the arrival stack 2. The term individual identity can here cover a number of parameters, for example the length, width, thickness, weight, quality, supplier, surface treatment, project allocation, charge on batch number, price and arrival date of the storage object 1. It should also be added here that in a preferred embodiment the collector 5, which is shown in Figure 1, comprises means for identifying the storage objects 1, for example in the form of an arrangement for weighing the storage objects. This means that the collector 5 emits signals to the control unit 10 concerning the weight of the secured storage object which, in the context of the handling of metal sheets, is often a clear identifier of the type of sheet, since the sheet dimensions and density are previously known and recorded under the given article number in the control unit 10. In other applications where storage objects of other types are used, the collector 5 can be equipped, for example, with bar-code scanners or other optical scanning means. Scanning means of an electronic type, for example comprising microchip marking of the storage objects, can of course also be used.

The following is a withdrawal list which has been set up to illustrate the method according to the invention:

| | |
|---|---|
| Sequence number 1 | Art No 2 |
| Sequence number 2 | Art No 7 |
| Sequence number 3 | Art No 9 |
| Sequence number 4 | Art No 3 |
| Sequence number 5 | Art No 8 |
| Sequence number 6 | Art No 7 |
| Sequence number 7 | Art No 10 |
| Sequence number 8 | Art No 1 |
| Sequence number 9 | Art No 6 |
| Sequence number 10 | Art No 5 |
| Sequence number 11 | Art No 5 |
| Sequence number 12 | Art No 7 |
| Sequence number 13 | Art No 4 |
| Sequence number 14 | Art No 2 |
| Sequence number 15 | Art No 6 |

The top line in the withdrawal list represents the withdrawal order which is to be executed first according to the user's requirements. The withdrawal order thus consists of a sequence number and an associated article number. Thus, in the example described, we have a withdrawal list comprising fifteen withdrawal orders.

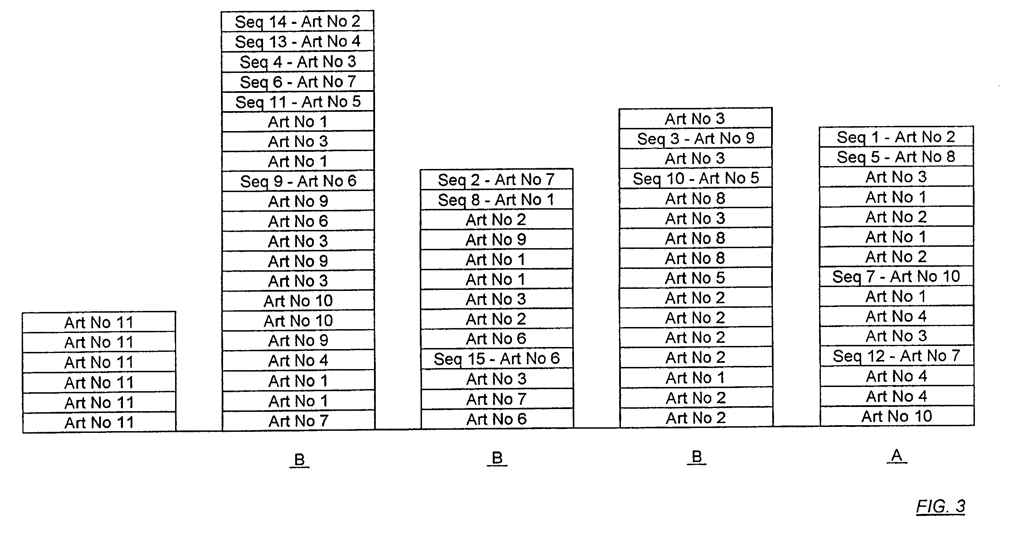

Consequently, there are also sequence numbers from 1 to 15, each coupled to a desired article number. Starting from the situation in Figure 2, and with a given withdrawal list according to Figure 3, the method will be explained below in stages. The method comprises the following four main stages: marking, collection, arrival and sorting.

The first main stage, marking, commences in **stage 1,** in which the control unit 10 searches for the first unmarked storage object 1 which is requested in the withdrawal order which is in turn in the withdrawal list and which unmarked storage object lies at the top of one of the said storage stacks 3 and/or in the arrival stack 2. It should be noted here that the control unit 10 detects the individual position of each storage object 1 in the store. The starting position and stage 1 are illustrated in Figure 2.

In **stage 2,** which is shown in Figure 3, the control unit 10, in an internal register, marks the storage object 1 searched in stage 1 with a sequence number according to the withdrawal order. In Figure 3, the designation "sequence number" has been shortened to "seq" for reasons of space. Stages 1 and 2 are repeated for as long as there are requested unmarked storage objects in the store.

In **stage 3,** the control unit 10 defines the storage stack which has the lowest positioned unmarked storage object 1 above a storage object marked in stage 2, and assigns this storage stack 3 a first category (A) and assigns other storage stacks a second category (B). The division into stack categories is also shown in Figure 3.

### The second stage, collection, now commences:

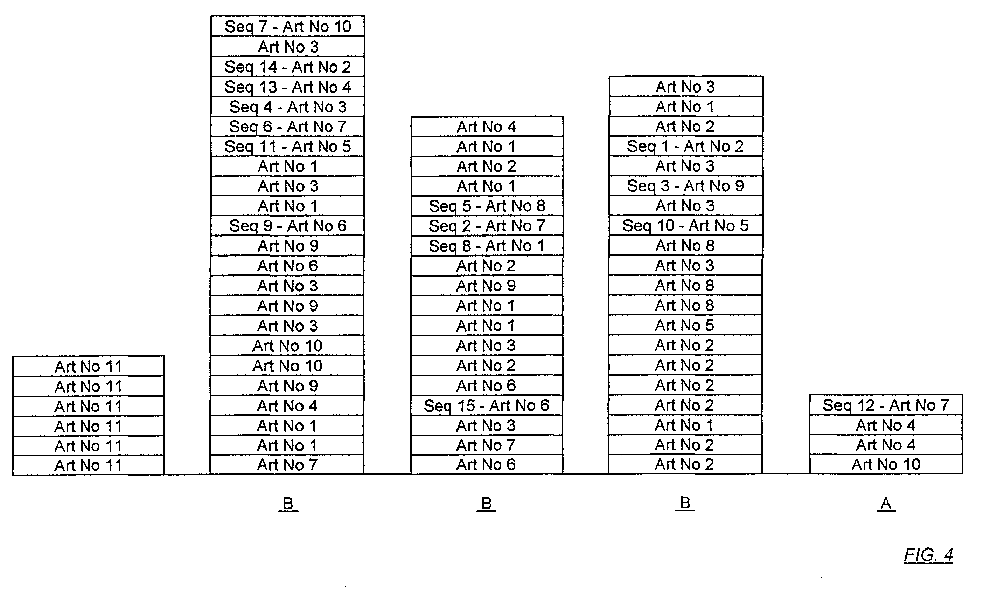

Referring to Figures 3 and 4, **stage 4** proceeds as follows: if in the storage stack 3 of the first category (A) there are one or more unmarked storage objects 1 above the lowest marked storage object 1, the collector 5 moves an unmarked or a marked storage object to a storage stack 3 of the said second category (B). Stage 4 is repeated until no unmarked storage objects 1 lie above the said lowest marked storage object in the storage stack 1 of the first category (A).

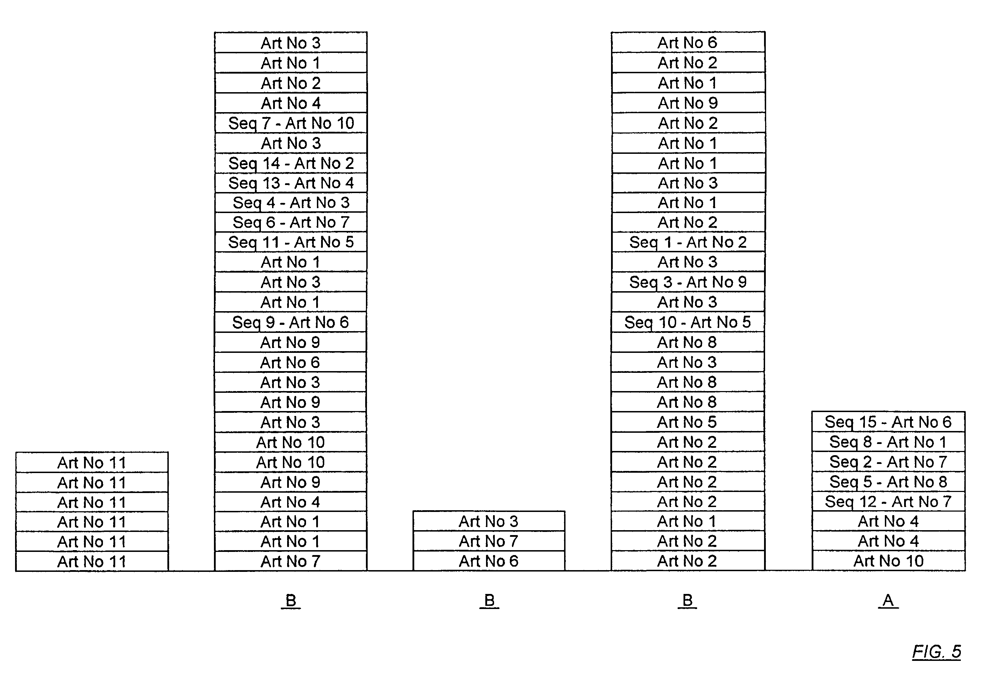

Thus, in Figure 5, storage objects have been moved across from the storage stack of the first category (A) to other storage stacks of the second category (B) in such a way that no unmarked storage objects lie above the lowest marked storage object - in the example sequence number 12 with article number 7. The situation shown in Figure 4 illustrates the store when the first phase of collection has been completed.

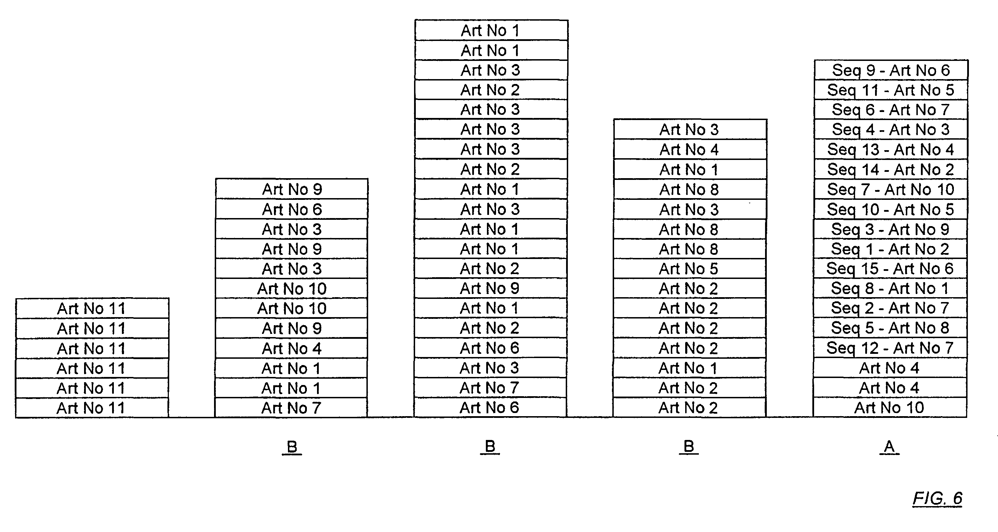

Referring to Figures 4, 5 and 6 in succession, the second phase of collection then proceeds as follows in **stage 5**: if, in any storage stack 3 of the second category (B), there is a marked storage object 1, the collector moves - from the lowest storage stack of the said category (B) which contains a marked storage object - an unmarked storage object in this storage stack to a second storage stack of the same category (B), or a marked storage object to a storage stack of the said first category (A). Figure 5 shows the situation when the second phase of collection has been carried out according to stage 5. Stage 5 is repeated until all the marked storage objects 1 are in the storage stack 3 of the first category (A). Collection is then completed, which phase is shown in Figure 6.

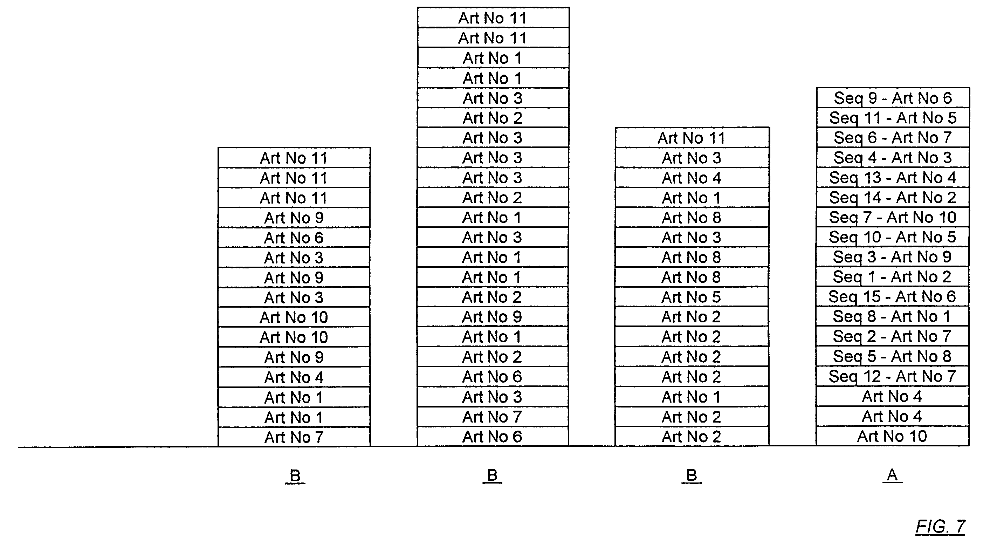

Referring to Figures 6 and 7, the second main stage of the method, storage, is carried out in **stage 6** by means of the collector 5 moving the storage objects 1 lying in the arrival stack 2 to one or more storage stacks of the second category (B). Allocation to the respective stack or storage stack of the second category (B) can be done randomly. Stage 6 is repeated until the arrival stack 2 is empty, which situation is illustrated in Figure 7. The arrival stage is thus completed.

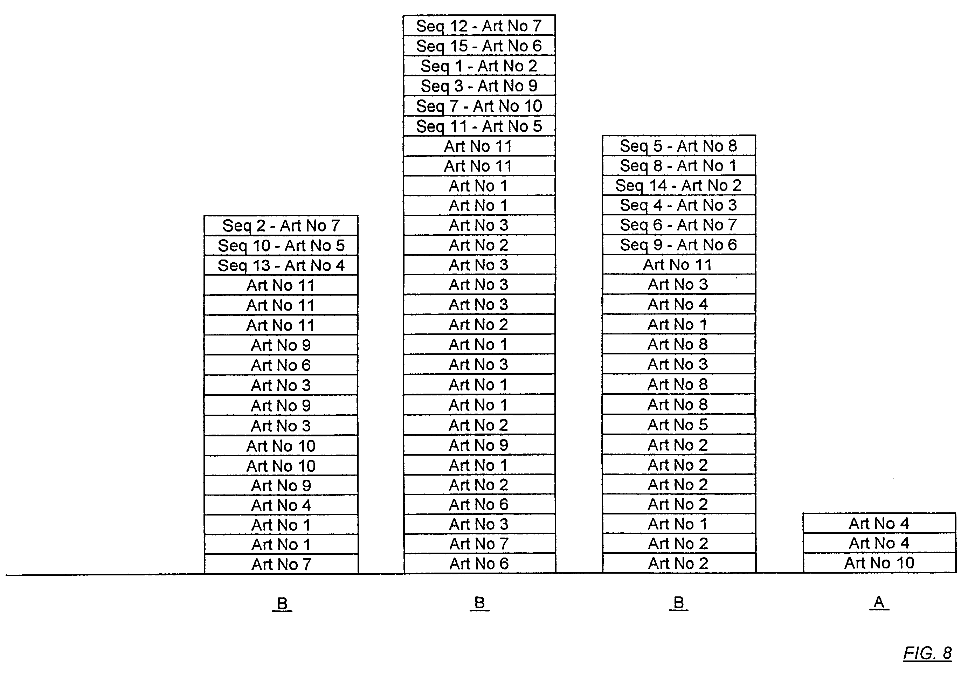

Referring to Figures 7 and 8, the third main stage of the method, sorting, now commences in **stage 7,** where the collector 5 moves the uppermost marked storage object 1 from the storage stack of the first category (A) to a storage stack 3 of the second category (B) on which a marked storage object, with the next higher sequence number in relation to the storage object which is moved, lies at the top.

**Stage 8:** if the condition for moving according to stage 7 is not satisfied, the collector moves the uppermost marked storage object 1 from the storage stack 3 of the first category (A) to a storage stack of the second category (B) which has no marked storage object 1.

**Stage 9:** if the condition for moving according to stage 8 is not satisfied, the collector 5 moves the uppermost marked storage object 1 from the storage stack 3 of the first category (A) to the storage stack 3 of the second category (B) whose uppermost marked storage object has the lowest sequence number in relation to the uppermost marked storage objects of the other storage stacks 3 of the same category (B).

Stages 7 to 9 are repeated until the storage stack 3 of the first category (A) has no marked storage objects. This situation is illustrated in Figure 8.

**Stage 10:** if all the marked storage objects lie in storage stacks of category (B), on marked storage objects with a higher sequence number than their own sequence number or on an unmarked storage object 1, the sorting is completed, otherwise the sorting continues in accordance with **stage 11** below. In the example shown, we are now at Figure 8. Since the condition according to stage 10 is still not satisfied, the sorting therefore continues according to stage 11 described below.

**Stage 11:** the collector 5 moves the storage object, which among the uppermost marked storage objects in the storage stacks of the second category (B) has a sequence number which is next higher than the sequence number of the storage object lying at the top of the storage stack 3 of the first category (A), to the storage stack 3 of the first category (A).

**Stage 12:** if the condition for moving in accordance with stage 11 is not satisfied, the collector 5 moves the storage object 1, which among the uppermost marked storage objects in the storage stacks 3 of the second category (B) has the lowest sequence number, back to the storage stack 3 of the first category (A).

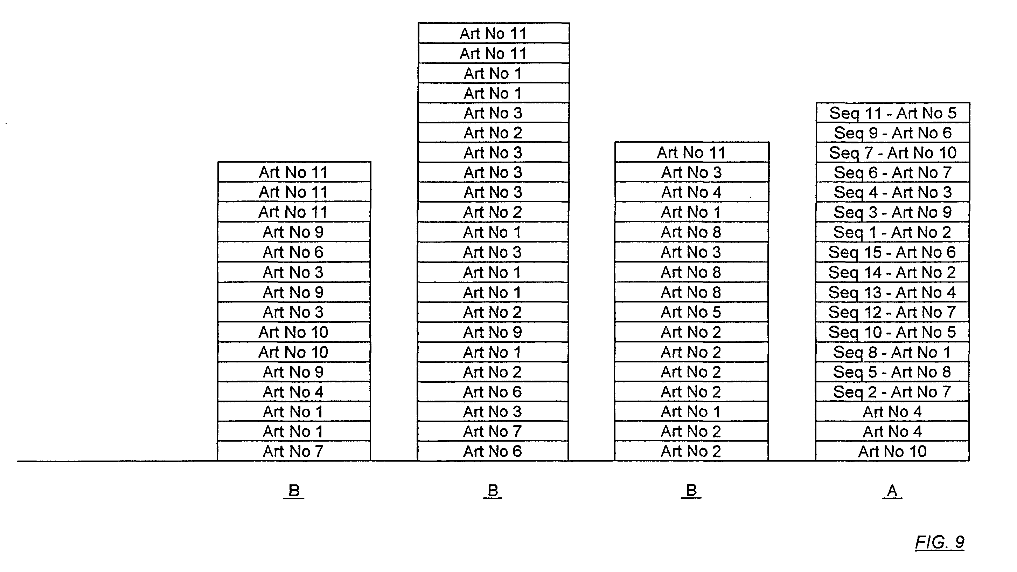

Stages 11 and 12 are repeated until all the marked storage objects are lying in the storage stack of the first category (A). This situation has been reached in Figure 9.

**Stage 13:** the sorting continues from stage 7, i.e. the collector 5 moves the uppermost marked storage object 1 from the storage stack of the first category (A) to a storage stack of the second category (B) on which a marked storage object 1, with the next higher sequence number in relation to the storage object which is moved, lies at the top. In the example shown, the sorting is now finished and the storage objects lie sorted in the storage stacks in such a way that the collector 5, at the time of delivery from the store, is able to pick up the storage objects in sequence according to the desired withdrawal list. In this example, the collector 5 thus first picks up the storage object with sequence number 1 and article number 2 from the storage stack of the second category (B) situated furthest to the right, after which the collector 5 picks up the storage object with sequence number 2 and article number 7 from the storage stack of the second category (B) situated furthest to the left. The collector then returns to the storage stack situated furthest to the left in order to deliver the storage object with sequence number 3 and article number 9. The delivery is then continued according to the same pattern until all the withdrawal orders in the withdrawal list have been executed. In the method according to the invention, it is therefore not necessary for all the storage objects present in the withdrawal list to be lying in one and the same storage stack at the end of sorting.

The invention is not limited to the illustrative embodiment described above and shown in the drawings, but can be freely varied within the scope of the attached patent claim.

## Claims

1. Method for storage handling of stackable storage objects (1), where
• the storage objects are supplied to a store in an arrival stack (2);
• the storage objects are stored in at least three storage stacks (3);
• the storage objects (1) are moved between the said arrival stack (2) and the storage stacks (3) by means of a collector (5) provided with means (9) for securing and releasing the storage objects;
• a control unit (10) provided with a processor controls the movements of the collector (5) via a communications link (14) and in accordance with instructions from a user, which instructions are input to the control unit (10) via a user interface (12, 13) coupled thereto;
• upon arrival of storage objects in the said arrival stack (2), the control unit (10) is fed with information on the individual identity of each storage object, its type and its position in the arrival stack (2);
• the said instructions include withdrawal orders which are arranged in a withdrawal list in the control unit (10) in the desired sequence, each withdrawal order concerning a storage object of a certain type,
**characterized in,**
**that** the method takes place in the following stages:
(marking)
**stage 1:** the control unit (10) searches for the first unmarked storage object (1) which is requested in the withdrawal order lying next in the withdrawal list and which lies at the top of one of the said storage stacks (3) and/or the arrival stack (2);
**stage 2:** in an internal register, the control unit (10) marks the storage object (1) found in stage 1 with a sequence number according to the withdrawal order desired in the withdrawal sequence;
***stages 1 and 2 are repeated as long as there are requested unmarked storage objects***
**stage 3:** the control unit (10) defines the storage stack (1) which has the lowest unmarked storage object above a storage object marked in stage 2 and assigns this storage stack a first category (A) and assigns other storage stacks (3) a second category (B);
(withdrawal)
**stage 4:** if in the storage stack (3) of the first category (A) there are one or more unmarked storage objects (1) above the lowest marked storage object, the collector moves an unmarked or a marked storage object to a storage stack of the said second category (B);
***stage 4 is repeated until no unmarked storage objects lie above the said lowest marked storage object in the storage stack of the first category (A)***
**stage 5:** if, in any storage stack (3) of the second category (B), there is a marked storage object (1), the collector moves from the lowest storage stack of the said category (B), which contains a marked storage object, an unmarked storage object in this storage stack to a second storage stack (3) of the same category (B), or a marked storage object to a storage stack of the said first category (A);
***stage 5 is repeated until all the marked storage objects are in the storage stack of the first category (A)***
(arrival)
**stage 6:** the collector (5) moves storage objects lying in the arrival stack (2) to one or more storage stacks (3) of the second category (B);
***stage 6 is repeated until the arrival stack is empty***
(sorting)
**stage 7:** the collector (5) moves the uppermost marked storage object (1) from the storage stack of the first category (A) to a storage stack of the second category (B) on which a marked storage object, with the next higher sequence number in relation to the storage object which is moved, lies at the top;
**stage 8:** if the condition for moving according to stage 7 is not satisfied, the collector (5) moves the uppermost marked storage object (1) from the storage stack of the first category (A) to a storage stack (3) of the second category (B) which has no marked storage object;
**stage 9:** if the condition for moving according to stage 8 is not satisfied, the collector (5) moves the uppermost marked storage object (1) from the storage stack of the first category (A) to that storage stack of the second category (B) whose uppermost marked storage object has the lowest sequence number in relation to the uppermost marked storage objects of the other storage stacks (3) of the same category (B);
***stages 7 - 9 are repeated until the storage stack of the first category (A) has no marked storage objects***
**stage 10:** if all the marked storage objects (1) lie in storage stacks (3) of the second category (B), on marked storage objects with a higher sequence number than their own sequence number or on an unmarked storage object, the sorting is terminated, otherwise the sorting continues in accordance with stage 11;
**stage 11:** the collector (15) moves the storage object (1) which, among the uppermost marked storage objects in the storage stacks (3) of the second category (B) has a sequence number which is next higher than the sequence number of the storage object lying at the top of the storage stack of the first category (A), to the storage stack (3) of the first category (A);
**stage 12:** if the condition for moving in accordance with stage 11 is not satisfied, the collector (5) moves the storage object (1) which, among the uppermost marked storage objects in the storage tacks (3) of the second category (B) has the lowest sequence number, back to the storage stack (3) of the first category (A);
***stages 11 and 12 are repeated until all the marked storage objects (1) are lying in the storage stack (3) of the first category (A)***
**stage 13:** the sorting continues from stage 7.

## Patentansprüche

1. Verfahren zum Handhaben und Lagern von stapelbaren Gegenständen (1), bei dem
• die Lagergegenstände einem Lager in einem Ankunftsstapel (2) zugeführt werden;
• die Lagergegenstände in mindestens drei Lagerstapeln (3) gelagert werden;
• die Lagergegenstände (1) zwischen dem Ankunftsstapel (2) und den Lagerstapeln (3) mittels eines Sammlers(5) bewegt werden, welcher mit Mitteln (9) zum Sichern und Loslassen der Lagergegenstände versehen ist;
• eine mit einem Prozessor versehene Steuereinheit (10) die Bewegungen des Sammlers (5) über einen Kommunikationsanschluss (14) und nach Anweisungen eines Benutzers steuert, dessen Anweisungen in die Steuereinheit (10) über eine daran gekoppelte Benutzerschnittstelle (12, 13) eingegeben werden;
• nach Ankunft der Lagergegenstände im Ankunftsstapel(2) der Steuereinheit (10) Daten über die jeweilige Identität jedes Lagergegenstandes, seine Art und seine Position im Ankunftsstapel (2) zugeführt werden;
• die Anweisungen Entnahmebefehle enthalten, welche in einer Entnahmeliste in der Steuereinheit (10) in der erwünschten Reihenfolge angeordnet sind, wobei jeder Entnahmebefehl einen Lagergegenstand einer bestimmten Art betrifft,
**gekennzeichnet durch,**
dass das Verfahren in den folgenden Stufen stattfindet:
(Markieren)
**Stufe 1:** die Steuereinheit (10) sucht nach dem ersten unmarkierten Lagergegenstand (1), welcher im Entnahmebefehl angefordert wird, der als nächstes in der Entnahmeliste steht, und welcher oben auf einem der Lagerstapel (3) und/oder dem Ankunftsstapel (2) liegt;
**Stufe 2:** in einem inneren Register markiert die Steuereinheit (10) den in Stufe 1 ermittelten Lagergegenstand (1) mit einer Laufnummer nach dem in der Entnahmefolge erwünschten Entnahmebefehl;
*** Stufen 1 und 2 werden wiederholt, solange unmarkierte Lagergegenstände angefordert werden***
**Stufe 3:** die Steuereinheit (10) definiert den Lagerstapel (1), welcher den untersten unmarkierten Lagergegenstand über einem in Stufe 2 markierten Lagergegenstand aufweist, und ordnet diesen Lagerstapel einer ersten Kategorie (A) zu und ordnet andere Lagerstapel (3) einer zweiten Kategorie (B) zu;
(Entnahme)
**Stufe 4:** wenn es im Lagerstapel (3) der ersten Kategorie (A) einen oder mehrere unmarkierte Lagergegenstände (1) über dem untersten markierten Lagergegenstand gibt, bewegt der Sammler einen unmarkierten oder markierten Lagergegenstand zu einem Lagerstapel der zweiten Kategorie (B);
*** Stufe 4 wird wiederholt, bis keine unmarkierten Lagergegenstände über dem untersten markierten Lagergegenstand im Lagerstapel der ersten Kategorie (A) liegen***
**Stufe 5:** wenn es in irgendeinem Lagerstapel (3) der zweiten Kategorie (B) einen markierten Lagergegenstand (1) gibt, bewegt der Sammler vom niedrigsten Lagerstapel der Kategorie (B), welcher einen markierten Lagergegenstand enthält, einen unmarkierten Lagergegenstand in diesem Lagerstapel zu einem zweiten Lagerstapel (3) der gleichen Kategorie (B), oder einen markierten Lagergegenstand zu einem Lagerstapel der ersten Kategorie (A) ;
*** Stufe 5 wird wiederholt, bis sich alle markierten Lagergegenstände im Lagerstapel der ersten Kategorie (A) befinden***
(Ankunft)
**Stufe 6:** der Sammler (5) bewegt im Ankunftsstapel (2) liegende Lagergegenstände zu einem oder mehreren Lagerstapeln (3) der zweiten Kategorie (B);
*** Stufe 6 wird wiederholt, bis der Ankunftsstapel leer ist***
(Sortieren)
**Stufe 7:** der Sammler (5) bewegt den obersten markierten Lagergegenstand (1) vom Lagerstapel der ersten Kategorie (A) zu einem Lagerstapel der zweiten Kategorie (B), auf welchem oben ein markierter Lagergegenstand mit der nächst höheren Laufnummer in Bezug auf den bewegten Lagergegenstand liegt;
**Stufe 8:** wenn der Zustand zum Bewegen nach Stufe 7 nicht erfüllt ist, bewegt der Sammler (5) den obersten markierten Lagergegenstand (1) vom Lagerstapel der ersten Kategorie (A) zu einem Lagerstapel (3) der zweiten Kategorie (B), welcher keinen markierten Lagergegenstand aufweist;
**Stufe 9:** wenn der Zustand zum Bewegen nach Stufe 8 nicht erfüllt ist, bewegt der Sammler den obersten markierten Lagergegenstand (1) vom Lagerstapel der ersten Kategorie (A) zum Lagerstapel der zweiten Kategorie (B), dessen oberster markierter Lagergegenstand die niedrigste Laufzahl in Bezug auf die obersten markierten Lagergegenstände der anderen Lagerstapel (3) der gleichen Kategorie (B) aufweist;
*** Stufen 7- 9 werden wiederholt, bis der Lagerstapel der ersten Kategorie (A) keine markierten Lagergegenstände aufweist***
**Stufe 10 :** wenn alle markierten Lagergegenstände (1) in den Lagerstapeln (3) der zweiten Kategorie (B) auf markierten Lagergegenständen mit einer höheren Laufzahl als ihrer eigenen oder auf einem unmarkierten Lagergegenstand liegen, ist das Sortieren beendet, ansonsten wird das Sortieren nach Stufe 11 fortgesetzt;
**Stufe 11:** der Sammler (15) bewegt den Lagergegenstand (1), der unter den obersten markierten Lagergegenständen in den Lagerstapeln (3) der zweiten Kategorie (B) eine Laufzahl aufweist, welche eins mehr als die Laufzahl des oben auf dem Lagerstapel der ersten Kategorie (A) liegenden Lagergegenstandes beträgt, zum Lagerstapel (3) der ersten Kategorie (A) ;
**Stufe 12:** wenn der Zustand zum Bewegen nach Stufe 11 nicht erfüllt ist, bewegt der Sammler (5) den Lagergegenstand (1), welcher unter den obersten markierten Lagergegenständen in den Lagerstapeln (3) der zweiten Kategorie (B) die niedrigste Laufzahl aufweist, zurück zum Lagerstapel (3) der ersten Kategorie (A) ;
*** Stufen 11 und 12 werden wiederholt, bis alle markierten Lagergegenstände (1) im Lagerstapel (3) der ersten Kategorie (A) liegen***
**Stufe 13:** das Sortieren fährt mit Stufe 7 fort.

## Revendications

1. Procédé de manutention pour stockage d'objets de stockage empilables (1), où
• les objets de stockage sont alimentés vers un dépôt sous forme d'une pile d'arrivée (2),
• les objets de stockage sont stockés dans au moins trois piles de stockage (3),
• les objets de stockage (1) sont déplacés entre ladite pile d'arrivée (2) et les piles de stockage (3) par l'intermédiaire d'un collecteur (5) muni de moyens (9) pour fixer et libérer les objets de stockage,
• une unité de commande (10) munie d'un processeur commande les déplacements du collecteur (5) via une liaison de transmission de données (14) et conformément à des instructions provenant d'un utilisateur, lesquelles instructions sont entrées au niveau de l'unité de commande (10) via une interface utilisateur (12, 13) reliée à celle-ci,
• lors de l'arrivée d'objets de stockage dans ladite pile d'arrivée (2), l'unité de commande (10) est alimentée en informations concernant l'identité individuelle de chaque objet de stockage, de son type et de sa position dans la pile d'arrivée (2),
• lesdites instructions comportent des ordres d'extraction qui sont agencés dans une liste d'extraction située dans l'unité de commande (10) dans la séquence voulue, chaque ordre d'extraction concernant un objet de stockage d'un certain type,
**caractérisé en ce que**
le procédé comporte les étapes suivantes :
(marquage)
étape 1 : l'unité de commande (10) recherche le premier objet de stockage non-marqué (1) qui est requis dans l'ordre d'extraction suivant de la liste d'extraction et qui est situé au niveau de la partie supérieure de l'une desdites piles de stockage (3) et/ou de la pile d'arrivée (2),
étape 2: dans un registre interne, l'unité de commande (10) marque l'objet de stockage (1) trouvé à l'étape 1 à l'aide d'un numéro de séquence selon l'ordre d'extraction voulu dans la séquence d'extraction,
***les étapes 1 et 2 sont répétées aussi longtemps qu'il y a des objets de stockage non-marqués requis***
étape 3 : l'unité de commande (10) définit la pile de stockage (1) qui a l'objet de stockage non-marqué le plus bas situé au-dessus d'un objet de stockage marqué à l'étape 2 et assigne à cette pile de stockage une première catégorie (A) et assigne aux autres piles de stockage (3) une seconde catégorie (B),
(extraction)
étape 4 : si dans la pile de stockage (3) de la première catégorie (A) il y a un ou plusieurs objets de stockage non-marqués (1) au-dessus de l'objet de stockage marqué le plus bas, le collecteur déplace un objet de stockage non-marqué ou marqué vers une pile de stockage de ladite seconde catégorie (B),
***l'étape 4 est répétée jusqu'à ce qu'aucun objet de stockage non-marqué ne se trouve au-dessus dudit objet de stockage marqué le plus bas de la pile de stockage de la première catégorie (A)***
étape 5 : si, dans une pile de stockage quelconque (3) de la seconde catégorie (B), il y a un objet de stockage marqué (1), le collecteur déplace depuis la pile de stockage la plus basse de ladite catégorie (B), qui concontient un objet de stockage marqué, un objet de stockage non-marqué situé dans cette pile de stockage vers une seconde pile de stockage (3) de la même catégorie (B), ou un objet de stockage marqué vers une pile de stockage de ladite première catégorie (A),
***l'étape 5 est répétée jusqu'à ce que les objets de stockage marqués soient dans la pile de stockage de la première catégorie (A)***
(arrivée)
étape 6 : le collecteur (5) déplace des objets de stockage situés dans la pile d'arrivée (2) vers une ou plusieurs piles de stockage (3) de la seconde catégorie (B),
***l'étape 6 est répétée jusqu'à ce que la pile d'arrivée soit vide***
(tri)
étape 7 : le collecteur (5) déplace l'objet de stockage marqué le plus haut (1) depuis la pile de stockage de la première catégorie (A) vers une pile de stockage de la seconde catégorie (B) sur laquelle un objet de stockage marqué, ayant le numéro de séquence plus élevé suivant par rapport à l'objet de stockage qui est déplacé, se trouve au niveau de la partie supérieure,
étape 8 ; si la condition de déplacement selon l'étape 7 n'est pas satisfaite, le collecteur (5) déplace l'objet de stockage marqué le plus haut (1) depuis la pile de stockage de la première catégorie (A) vers une pile de stockage (3) de la seconde catégorie (B) qui n'a pas d'objet de stockage marqué,
étape 9 : si la condition de déplacement selon l'étape 8 n'est pas satisfaite, le collecteur (5) déplace l'objet de stockage marqué le plus haut (1) depuis la pile de stockage de la première catégorie (A) vers la pile de stockage de la seconde catégorie (B) dont l'objet de stockage marqué le plus haut a le numéro de séquence le plus bas par rapport aux objets à stockage marqués les plus hauts des autres piles de stockage (3) de la même catégorie (B),
***les étapes 7 à 9 sont répétées jusqu'à ce que la pile de stockage de la première catégorie (A) n'ait pas d'objet de stockage marqués***
étape 10 : si tous les objets de stockage marqués (1) sont situés dans des piles de stockage (3) de la seconde catégorie (B), sur des objets de stockage marqués à l'aide d'un numéro de séquence plus élevé que leur propre numéro de séquence ou sur un objet de stockage non-marqué, le tri est terminé, sinon le tri se poursuit conformément à l'étape 11,
étape 11 : le collecteur (15) déplace l'objet de stockage (1) qui, parmi les objets de stockage marqués les plus hauts des piles de stockage (3) de la seconde catégorie (B), a un numéro de séquence qui est immédiatement au-dessus du numéro de séquence de l'objet de stockage situé au niveau de la partie supérieure de la pile de stockage de la première catégorie (A), vers la pile de stockage (3) de la première catégorie (A),
étape 12 : si la condition de déplacement selon l'étape 11 n'est pas satisfaite, le collecteur (5) déplace l'objet de stockage (1) qui, parmi les objets de stockage marqués les plus hauts des piles de stockage (3) de la seconde catégorie (B), a le numéro de séquence le plus bas, en retour vers la pile de stockage (3) de la première catégorie (A),
***les étapes 11 et 12 sont répétées jusqu'à ce que les objets de stockage marqués (1) soient situés dans la pile de stockage (3) de la première catégorie (A)***
étape 13 : le tri se poursuit à partir de l'étape 7.
